# EUROPEAN PATENT SPECIFICATION

(11) **EP 3 108 991 B1**
(45) Date of publication and mention of the grant of the patent: **18.08.2021**
(21) Application number: 16174569.0
(22) Date of filing: 15.06.2016
(51) Int. Cl.: B23K 20/02

(54) **METHOD OF MANUFACTURING A HEAT EXCHANGER PLATE BY TRANSITION LIQUID PHASE BONDING**
HERSTELLUNGSVERFAHREN EINER WÄRMETAUSCHERPLATTE DURCH BINDUNG DURCH EINE VORÜBERGEHENDE FLÜSSIGE PHASE
PROCÉDÉ DE FABRICATION D'UNE PLAQUE D'ÉCHANGEUR DE CHALEUR PAR LIAISON EN PHASE LIQUIDE TRANSITOIRE

(30) Priority: 22.06.2015 KR 20150088263
(43) Date of publication of application: 28.12.2016
(73) Proprietor: Doosan Heavy Industries & Construction Co., Ltd., Gyeongsangnam-do, 51711 (KR)
(72) Inventor: KIM, Jeong Kil, 46762 Busan (KR); KIM, Yong Jai, 51427 Gyeongsangnam-do (KR); SHIM, Deog Nam, 51499 Gyeongsangnam-do (KR); JUNG, In Chul, 51149 Gyeongsangnam-do (KR)
(74) Representative: Ter Meer Steinmeister & Partner

(56) References cited:
- EP-A1- 2 853 333
- EP-A2- 0 615 810
- US-A1- 2007 029 369
- None

## Description

Exemplary embodiments of the present disclosure relate to a method of manufacturing a heat exchanger including a plate laminate made by bonding the plates with TLP bonding.

In general, a refrigeration system such as a refrigerator or an air conditioner includes a compressor which compresses a gas refrigerant, a condenser which exchanges heat between the refrigerant compressed by the compressor and outside air to condense the refrigerant by releasing the heat to the outside, an expansion mechanism which expands the refrigerant condensed by the condenser, and an evaporator which evaporates the refrigerant expanded by the expansion mechanism by absorbing heat from air in a space to be cooled or for air cooling.

Each of the evaporator and the condenser is a heat exchanger which exchanges heat between refrigerant and ambient air. The heat exchanger may be a fin-type heat exchanger configured by a refrigerant pipe, through which a refrigerant passes, and a plurality of fins arranged to be spaced apart from each other while penetrating the refrigerant pipe, or a plate-type heat exchanger configured by a plurality of plates and a refrigerant pipe attached to one surface of each plate.

Conventionally, solid phase bonding or brazing is widely used to bond the plates in the plate-type heat exchanger.

However, in order to use the solid phase bonding, it is necessary to strictly manage the surface roughness of each plate and to perform a pressing process under the conditions of a high degree of vacuum equal to or greater than about 10⁻⁴ torr and a high pressure equal to or greater than about 3 to 7 MPa. For this reason, it is very difficult to actually perform the solid phase bonding.

In addition, the brazing is performed by inserting a filler metal between the plates and bonding them in a vacuum furnace or a hydrogen furnace. However, the brazing may lead to poor bonding since bubbles are generated or precipitates are formed while an organic binder contained in the liquid-phase filler metal is dissolved and volatilized.
US 2007/029369 discloses a method of manufacturing a heat exchanger, comprising: preparing two or more plates; forming an alloy layer wherein the alloy layer comprises at least one of melting point depression element such as B, Si, and P; laminating the two or more plates (1), with the alloy layer between the plates; performing bonding heat treatment by heating and maintaining the laminated plates under a temperature in the range of 900 to 1200°C, such that the alloy layer is bonded to the adjacent plate by transition liquid phase bonding.

Accordingly, there is a need for a bonding methods to bond plates at high efficiency by simple and easy processes.

### BRIEF SUMMARY

An object of the present disclosure is to provide a method of manufacturing a heat exchanger in which a plurality of plates are simply and easily bonded at low cost by transition liquid phase bonding using a heat exchanger plate, and the bonding portion formed thereby has a high quality.

Other objects and advantages of the present disclosure can be understood by the following description, and become apparent with reference to the embodiments of the present invention.

The present invention is defined in claim 1 which relates to a method of manufacturing a heat . Said method is, inter alia, characterized in that it comprises performing bonding heat treatment by heating and maintaining the laminated plates under conditions of a degree of vacuum of 1 × 10⁻⁴ to 1 × 10⁻³ torr and a temperature of 900 to 1200°C for 0.1 to 6 hours.

The forming an alloy layer is performed by electroless plating or thermal spray coating.

The forming an alloy layer may be performed such that the alloy layer has a thickness of 30 to 100 µm.

The method further includes, after forming the alloy layer by the electroless plating or thermal spray coating, forming a passage operable to flow a liquid or gas in each of the plates.

The "second plate" used herein means any plate, which is formed or not formed with an alloy layer, for transition liquid phase bonding according to the present invention, and may have a material equal to or different from the plate, as the bonding object, having the alloy layer.

It is to be understood that both the foregoing general description and the following detailed description of the present disclosure are exemplary and explanatory and are intended to provide further explanation of the invention(s) as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1A is a cross-sectional view illustrating a heat exchanger plate manufactured according to an embodiment of the present disclosure;
Fig. 1B is a cross-sectional view illustrating a heat exchanger plate manufactured according to an embodiment of the present disclosure;
Fig. 2 is a view schematically illustrating a plasma gun used when an alloy layer is formed on a plate by thermal spray coating according to an embodiment of the present disclosure;
Fig. 3 is a flowchart schematically illustrating a process of manufacturing a heat exchanger plate according to an embodiment of the present disclosure;
Fig. 4 is a flowchart schematically illustrating a process of manufacturing a heat exchanger plate according to an embodiment of the present invention;
Fig. 5 is a cross-sectional photograph illustrating a bonding portion when plates are bonded by transition liquid phase bonding using a heat exchanger plate according to an embodiment of the present disclosure (Example 1) in Experimental Example 1;
Fig. 6 is a cross-sectional photograph illustrating a bonding portion when plates are bonded by brazing (Comparative Example 1) in Experimental Example 1;
Fig. 7 is a cross-sectional photograph illustrating a bonding portion when plates are bonded by transition liquid phase bonding using a heat exchanger plate according to an embodiment of the present disclosure (Example 2) in Experimental Example 2;
Fig. 8 is a cross-sectional photograph illustrating a bonding portion before post heat treatment when plates are bonded by solid phase bonding (Comparative Example 2) in Experimental Example 2; and
Fig. 9 is a cross-sectional photograph illustrating a bonding portion after post heat treatment when plates are bonded by solid phase bonding (Comparative Example 2) in Experimental Example 2.

### DETAILED DESCRIPTION

Exemplary embodiments of the present disclosure will be described below in more detail with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Throughout the disclosure, like reference numerals refer to like parts throughout the various figures and embodiments of the present disclosure.

The present inventors discovered that, when a heat exchanger including a plurality of plates is manufactured, it is possible to improve the quality of a bonding portion and simply and easily perform a bonding process under a mild condition compared to conventional solid phase bonding since defects do not occur in the bonding portion when the plates are bonded by transition liquid phase (TLP) bonding.

Specifically, a heat exchanger plate includes a plate, and an alloy layer which may be bonded to a bonding object by transition liquid phase bonding on at least one surface of the plate. The alloy layer includes at least one of melting point depression elements such as B, Si, and P.

In the present disclosure, the bonding object refers to another object which may be bonded with the plate. For example, the bonding object may be a second plate which is formed or not formed with an alloy layer, or may be other components such as a refrigerant pipe included in a heat exchanger, but the present disclosure is not limited thereto.

In the present disclosure, the alloy layer is formed by electroless plating or thermal spray coating.

Here, at least one surface of the plate according to the present disclosure is formed with a passage in which heat exchange may be performed while a liquid or gas phase fluid flows in the passage. The alloy layer of the present disclosure may be formed on a surface in which the passage is formed, or may be formed on a different surface in which the passage is not formed. Here, when the alloy layer is formed on the surface in which the passage is formed, the alloy layer is formed only in a portion except for the passage.

In addition, the shape of the passage is not especially limited in the present disclosure. For example, the passage may have a zigzag shape that obtains a sufficient passage length in order to enhance heat exchange efficiency.

When plates are bonded by conventional brazing, the filler metal between the plates is typically used in the form of powder. In this case, if the powder-type filler metal is not accurately applied to the bonding portion of the plates, a passage may be clogged with the filler metal.

However, the passage on the plate may not be clogged in the present disclosure since the alloy layer formed by electroless plating or thermal spray coating for transition liquid phase bonding is uniformly formed along the surface of the plate which is not formed with the passage. In addition, since the bonding is performed only in a portion in which the passage is not formed, a bonding quality can be further enhanced.

In addition, the thickness of the alloy layer is not especially limited in the present disclosure. For example, it is preferable that the alloy layer has a thickness of 30 to 100 µm. When the alloy layer has a thickness less than 30 µm, it may be more difficult to form a bonding portion. When the alloy layer has a thickness greater than 100 µm, the alloy layer may not be sufficiently spread to a base material during transition liquid phase bonding and it may be problematic in terms of economy.

In the present disclosure, the composition of the alloy layer includes at least one of elements such as B, Si, and P which may depress the melting point of the plate base material, and may further include Cr and/or Ni as occasional demands in order to improve corrosion resistance and oxidation resistance.

In addition, the specific composition of the alloy layer may be properly adjusted according to materials of the plate in the present disclosure. When the plate is made of an STS material or a nickel alloy, the alloy layer may preferably include 5 to 25% by weight of Cr, more than 0 to 10% by weight of Si, more than 0 to 5% by weight of Al, more than 0 to 5% by weight of Ti, 0.5 to 4% by weight of B, and a balance of Ni. More preferably, the alloy layer may include 5 to 20% by weight of Cr, more than 0 to 5% by weight of Si, more than 0 to 5% by weight of Al, more than 0 to 5% by weight of Ti, 0.5 to 4% by weight of B, and a balance of Ni. In another example, the alloy layer may include 1 to 5% by weight of B and 95 to 99% by weight of Ni. In a further example, the alloy layer may include 1 to 13% by weight of P and 87 to 99% by weight of Ni, and more preferably may include 1 to 10% by weight of P and 90 to 99% by weight of Ni.

Here, the specific composition of the STS plate is not especially limited. For example, STS 316L or STS 304 may be used as the material of the plate.

The specific composition of the nickel-alloy plate is not especially limited. For example, an inconel 617 plate or a hayness 230 plate may be used as the plate.

When the plate is made of an aluminum alloy, the alloy layer may preferably include more than 0 to 15% by weight of Si, more than 0 to 2% by weight of Mg, and a balance of Al.

Meanwhile, the thickness of the plate used in the present invention is not especially limited, and it may be selected according to devices to which a heat exchanger is applied or components thereof. However, the plate preferably has a thickness of 0.05 to 0.15 mm in consideration of heat exchanger efficiency and economy.

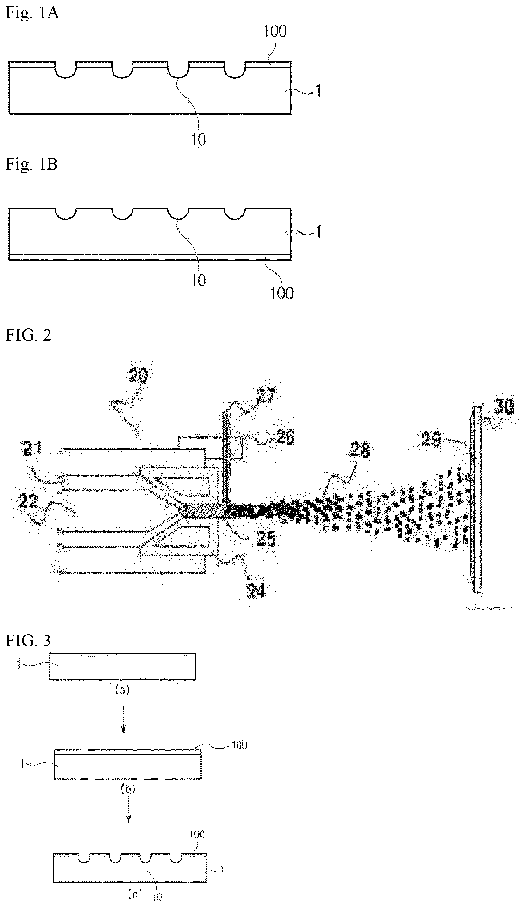

Fig. 1A is a cross-sectional view illustrating a heat exchanger plate according to an embodiment of the present disclosure. Refrigerant passages 10 having a hemispherical cross-sectional shape are formed on one surface of a plate 1, and an alloy layer 100 for transition liquid phase bonding is formed along a portion in which the passages 10 are not formed on the surface of the plate 1.

Fig. 1B is a cross-sectional view illustrating a heat exchanger plate according to another embodiment of the present disclosure. Refrigerant passages 10 having a hemispherical cross-sectional shape are formed on one surface of a plate 1, and an alloy layer 100 for transition liquid phase bonding is formed along a surface different from the surface on which the passages 10 are formed.

In the present disclosure, the bonding object refers to another object which may be bonded with the plate. For example, the bonding object may be a second plate which is formed or not formed with an alloy layer, or may be other components such as a refrigerant pipe included in a heat exchanger, but the present disclosure is not limited thereto.

The step of forming an alloy layer is performed by electroless plating or thermal spray coating.

Specifically, the electroless plating may be performed by depositing at least one surface of the plate into a plating solution which includes an alloy composition having at least one melting point depression element of B and P, and a reducing agent.

Here, the type of the reducing agent is not especially limited. For example, the reducing agent may be at least one selected from the group consisting of formaldehyde (HCHO), glyoxylic acid made based on glycerin, sodium hypophosphite (NaPO₂H_{2.}H₂O), boron hydride, and dimethylamine-boron (DMAB).

In addition, the thermal spray coating may be performed by spraying an alloy composition having at least one melting point depression element of B and P onto at least one surface of the plate using a plasma gun or the like.

In more detail, Fig. 2 is a view schematically illustrating a plasma gun 20 used for thermal spray coating. When plasma gas (e.g. Ar, N₂, H₂, or He) is introduced into the plasma gun 20 through a gas inlet 21, the gas is partially dissociated while passing through a gap between a cathode 22 and an anode 24 to which high-voltage DC power (typically, 30 to 100 KV, 400 to 1000 A) is applied, to thereby form a plasma flame 25 having a high temperature of 5,000 to 15,000°C, and an alloy composition made in the form of powder or wire is injected into the high-temperature plasma flame 25 through a powder inlet 27. The powder inlet 27 is fixed to the plasma gun by a support 26, and the powder-type alloy composition 28 injected through the powder inlet 27 flies toward a coating object, i.e. a plate 30 at high speed (200 to 700 m/s) in the state in which it is fully or partially melted by the high-temperature plasma flame, thereby forming an alloy layer 29.

Meanwhile, at least one surface of the plate may be formed with a passage in which heat exchange may be performed while a liquid or gas phase fluid used as refrigerant flows in the passage. The process of forming the passage is not especially limited, and may be performed by typical methods known to those skilled in the art. For example, various passages may be formed on the plate by machining or chemical etching.

The process of forming the passage is performed after the step of forming an alloy layer.

The step of forming an alloy layer in the present invention is preferably performed such that the alloy layer has a thickness of 30 to 100 µm. When the alloy layer has a thickness less than 30 µm, it may be difficult to sufficiently form a bonding portion. When the alloy layer has a thickness greater than 100 µm, the alloy layer may not be sufficiently spread to a base material during transition liquid phase bonding and it may be problematic in terms of economy.

Since the composition of the alloy layer, and the thickness and formation of the plate in the method of manufacturing a plate are similar to those in the above plate according to the present disclosure, detailed description thereof will be omitted.

Fig. 3 is a flowchart schematically illustrating a process of manufacturing a heat exchanger plate according to an embodiment of the present disclosure. After a plate 1 is first prepared (a), an alloy layer 100 is formed on one surface of the plate 1 (b), and passages 10 are formed on the surface formed with the alloy layer 100 (c).

Alternatively, the present disclosure provides a heat exchanger including two or more plates. In the heat exchanger, the two or more plates are laminated in the state in which an alloy layer is interposed between one plate and another plate, and the alloy layer forms a bonding portion by transition liquid phase bonding.

Specifically, when two or more plates, each having an alloy layer formed thereon, are laminated in the state in which the alloy layer is interposed between the two plates, the alloy layer may form a plate bonding portion by transition liquid phase bonding. That is, when a melting point depression element such as B, Si, or P contained in the alloy layer is spread to a plate base material during the transition liquid phase bonding, the melting point of the alloy layer is increased so that the bonding portion may be formed by generation of isothermal solidification.

In the present disclosure, the alloy layer may be formed by electroless plating or thermal spray coating.

In addition, although the thickness of the alloy layer is not especially limited, the alloy layer preferably has a thickness of 30 to 100 µm. When the alloy layer has a thickness less than 30 µm, it may be difficult to sufficiently form a bonding portion. When the alloy layer has a thickness greater than 100 µm, the alloy layer may not be sufficiently spread to the base material for transition liquid phase bonding and it may be problematic in terms of economy.

In the present disclosure, the composition of the alloy layer includes at least one of elements such as B, Si, and P which may depress the melting point of the plate base material, and may further include Cr and/or Ni as occasional demands in order to improve corrosion resistance and oxidation resistance.

In addition, the specific composition of the alloy layer may be properly adjusted according to materials of the plate in the present disclosure. When the plate is made of an STS material or a nickel alloy in the present disclosure, the alloy layer may preferably include 5 to 25% by weight of Cr, more than 0 to 10% by weight of Si, more than 0 to 5% by weight of Al, more than 0 to 5% by weight of Ti, 0.5 to 4% by weight of B, and a balance of Ni. More preferably, the alloy layer may include 5 to 20% by weight of Cr, more than 0 to 5% by weight of Si, more than 0 to 5% by weight of Al, more than 0 to 5% by weight of Ti, 0.5 to 4% by weight of B, and a balance of Ni. In another example, the alloy layer may include 1 to 5% by weight of B and 95 to 99% by weight of Ni. In a further example, the alloy layer may include 1 to 13% by weight of P and 87 to 99% by weight of Ni, and more preferably may include 1 to 10% by weight of P and 90 to 99% by weight of Ni.

Here, the specific composition of the STS plate is not especially limited. For example, STS 316L or STS 304 may be used as the material of the plate.

The specific composition of the nickel-alloy plate is not especially limited. For example, an inconel 617 plate or a hayness 230 plate may be used as the plate.

When the plate is made of an aluminum alloy in the present invention, the alloy layer may preferably include more than 0 to 15% by weight of Si, more than 0 to 2% by weight of Mg, and a balance of Al.

Meanwhile, at least one surface of the plate according to the present disclosure is formed with a passage in which heat exchange may be performed while a refrigerant flows in the passage. The shape of the passage is not especially limited in the present disclosure. For example, the passage may have a zigzag shape. In this case, the alloy layer of the present disclosure may be formed on a surface in which the passage is formed, or may be formed on a different surface in which the passage is not formed. Here, when the alloy layer is formed on the surface in which the passage is formed, the alloy layer is formed only in a portion except for the passage.

In addition, the thickness of the plate is not especially limited in the present disclosure, and it may be selected according to devices to which a heat exchanger is applied or components thereof. However, the plate preferably has a thickness of 0.05 to 0.15 mm in consideration of heat exchanger efficiency and economy.

The present invention is characterized by performing bonding heat treatment on the laminated plates under the conditions of a degree of vacuum of 1 × 10⁻⁴ to 1 × 10⁻³ torr and a temperature of 900 to 1200°C for 0.1 to 6 hours.

The present disclosure may first perform the step of preparing two or more plates. The thickness of each of the plates is not especially limited, and it may be selected according to devices to which a heat exchanger is applied or components thereof. However, the plate preferably has a thickness of 0.05 to 0.15 mm in consideration of heat exchanger efficiency and economy.

When the two or more plates are prepared, ta step of forming an alloy layer on at least one surface of each of the plates may be performed. The alloy layer is formed by electroless plating or thermal spray coating.

Specifically, the electroless plating may be performed by depositing at least one surface of the plate into a plating solution which includes an alloy composition having at least one melting point depression element of B and P, and a reducing agent.

Here, the type of the reducing agent is not especially limited. For example, the reducing agent may be at least one selected from the group consisting of formaldehyde (HCHO), glyoxylic acid made based on glycerin, sodium hypophosphite (NaPO₂H_{2.}H₂O), boron hydride, and dimethylamine-boron (DMAB).

In addition, the thermal spray coating may be performed by spraying an alloy composition having at least one melting point depression element of B and P onto at least one surface of the plate using a plasma gun or the like.

Meanwhile, at least one surface of the plate used in the present disclosure is formed with a passage in which heat exchange may be performed while a liquid or gas phase fluid used as refrigerant flows in the passage. The process of forming the passage is not especially limited, and may be performed by typical methods known to those skilled in the art. For example, various passages may be formed on the plate by machining or chemical etching.

The process of forming the passage is performed after the step of forming an alloy layer.

The step of forming an alloy layer in the present invention is preferably performed such that the alloy layer has a thickness of 30 to 100 µm. When the alloy layer has a thickness less than 30 µm, it may be difficult to sufficiently form a bonding portion. When the alloy layer has a thickness greater than 100 µm, the alloy layer may not be sufficiently spread to a base material during transition liquid phase bonding and it may be problematic in terms of economy.

When the plates, each having the alloy layer formed thereon, are prepared, the step of laminating the two or more plates may be performed to form a plate laminate. In this case, the two or more plates may be laminated such that the alloy layer is interposed between one plate and another plate.

In addition, a plate which is not formed with an alloy layer may be additionally laminated on the uppermost layer or lowermost layer of the plate laminate.

The present disclosure may then perform a transition liquid phase bonding process including a step of performing bonding heat treatment by heating and maintaining the laminated plates under the conditions of a degree of vacuum of 1 × 10⁻⁴ to 1 × 10⁻³ torr and a temperature of 900 to 1200°C for 0.1 to 6 hours, and slowly cooling the laminated plates to a temperature of 20 to 25°C. Since a melting point depression element such as B, Si, or P contained in the alloy layer is spread to a plate base material when the bonding heat treatment is performed, the melting point of the alloy layer is increased so that an isothermal bonding portion may be formed.

Since blow holes or precipitates are not formed in the bonding portion formed in the present disclosure by the transition liquid phase bonding process, the plate can have a high boning quality. In addition, since there is no need for the conditions of a high degree of vacuum and a high-temperature environment for bonding, the process can be easily and economically employed and it is possible to increases production efficiency.

Since the composition of the alloy layer and the formation of the plate in the method of manufacturing a heat exchanger are similar to those in the above heat exchanger according to the present invention, detailed description thereof will be omitted.

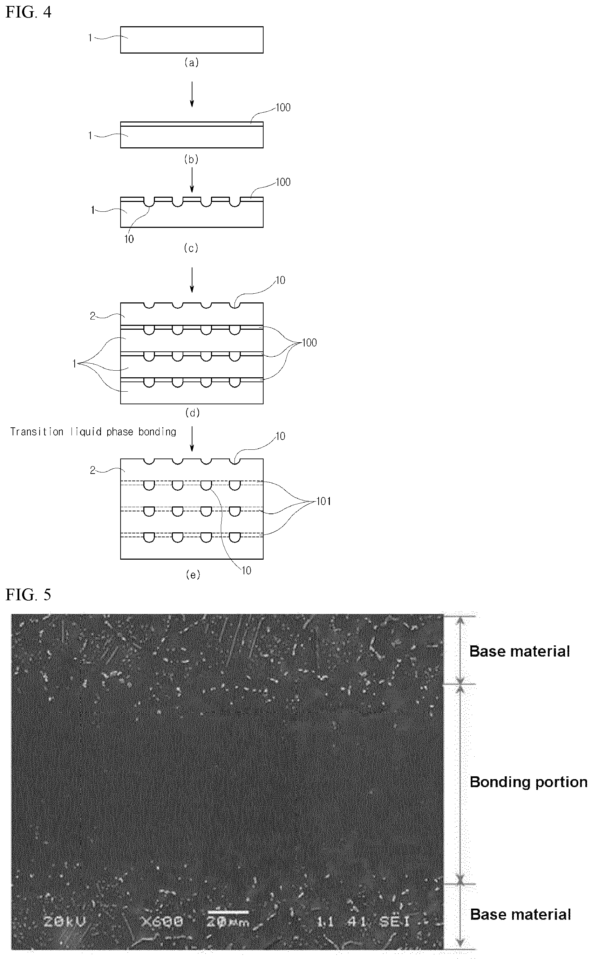

Fig. 4 is a flowchart schematically illustrating a process of manufacturing a heat exchanger plate according to an embodiment of the present disclosure. The heat exchanger is manufactured in such a manner that, after a plate 1 is first prepared (a), an alloy layer 100 is formed on one surface of the plate 1 (b), passages 10 are formed on the surface formed with the alloy layer 100 (c), three plates are laminated such that an alloy layer 100 is interposed between two plates 1, a plate 2 which is not formed with an alloy layer is laminated on the uppermost layer to for a plate laminate (d), and the alloy layer 100 forms a bonding portion 101 by transition liquid phase bonding.

Hereinafter, the present disclosure will be described in more detail through specific embodiments. The following embodiments are given by way of examples for the understanding of the present disclosure, and the present disclosure is not limited thereto.

### [Embodiments]

### [Manufacturing Example 1]

After an STS 316L plate is prepared, an alloy layer is formed by immersing one surface of the plate into a plating solution which includes an alloy composition composed of 10% by weight of P and 90% by weight of Ni, and a reducing agent of sodium hypophosphite (Na-PO₂H_{2.}H₂O).

### [Manufacturing Example 2] Ni-based Plate

After a haynes 230 plate is prepared, an alloy layer is formed by immersing one surface of the plate in a plating solution which includes an alloy composition composed of 3% by weight of B and 97% by weight of Ni, and a reducing agent of sodium hypophosphite (Na-PO₂H_{2.}H₂O).

### [Manufacturing Example 3] Al-based Plate

After an incoloy 800H plate is prepared, an alloy layer is formed by performing thermal spray coating on an alloy composition composed of 12% by weight of Si, 1.5% by weight of Mg, and a balance of Al using a plasma gun of Fig. 2. Here, nitrogen gas is used as plasma gas in the thermal spray coating.

### [Examples 1 to 3]

After a plate which is not formed with an alloy layer is laminated on the alloy layer manufactured in the manufacturing examples 1 to 3, a plate laminate is manufactured by performing bonding heat treatment on the laminated plate by heating and maintaining the same under the conditions of a degree of vacuum of 3 × 10⁻⁴ torr and a temperature of 1,050 to 1,100°C for one hour, and then by slowly cooling the same to a room temperature.

### [Comparative Example 1]

After two plates having an STS 316L material are prepared, a plate laminate is manufactured by inserting an aluminum filler alloy, which is composed of 6% by weight of Si, 4% by weight of Zn, 0.5% by weight of Cu, and a balance of Al, between the two plates and by brazing the same at a temperature of 600°C for 10 minutes in nitrogen atmosphere.

### [Comparative Example 2]

After two Haynes 230 plates are prepared, a plate laminate is manufactured by bonding the two plates at a temperature of 1150°C and a pressure of 4 MPa for 4 hours through the contact thereof, and then by performing post heat treatment on the same at a temperature of 1200°C for 100 hours.

### [Experimental Example 1]

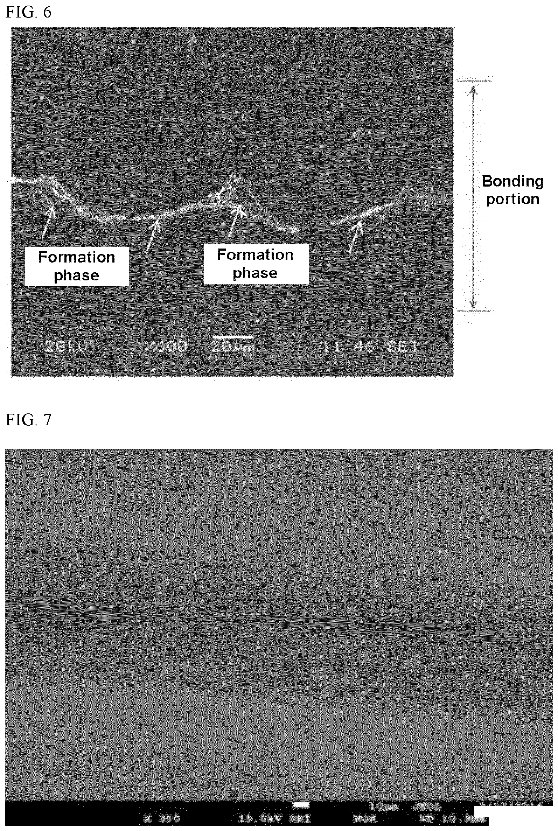

Figs. 5 and 6 illustrate respective photographs obtained by observing the bonding portions of the plate laminates manufactured in the example 1 and comparative example 1 using an electron microscope (SEM).

As illustrated in Fig. 5, it may be seen that the two plates are bonded without particular separation in the bonding portion of the plate laminate according to the present disclosure, and any formation phase or defect does not occur in the bonding portion.

On the other hand, as illustrated in Fig. 6, when two plates are bonded by brazing, it may be seen that various formation phases are formed in line in the bonding portion. The formation phases may have an adverse influence on mechanical physical properties of the bonding portion.

### [Experimental Example 2]

Figs. 7 to 9 illustrate respective photographs obtained by observing the bonding portions of the plate laminates manufactured in the example 2 and comparative example 2 using an electron microscope (SEM).

As illustrated in Fig. 7, it may be seen that the two plates are bonded without particular separation in the bonding portion of the plate laminate according to the present disclosure, and any formation phase or defect does not occur in the bonding portion.

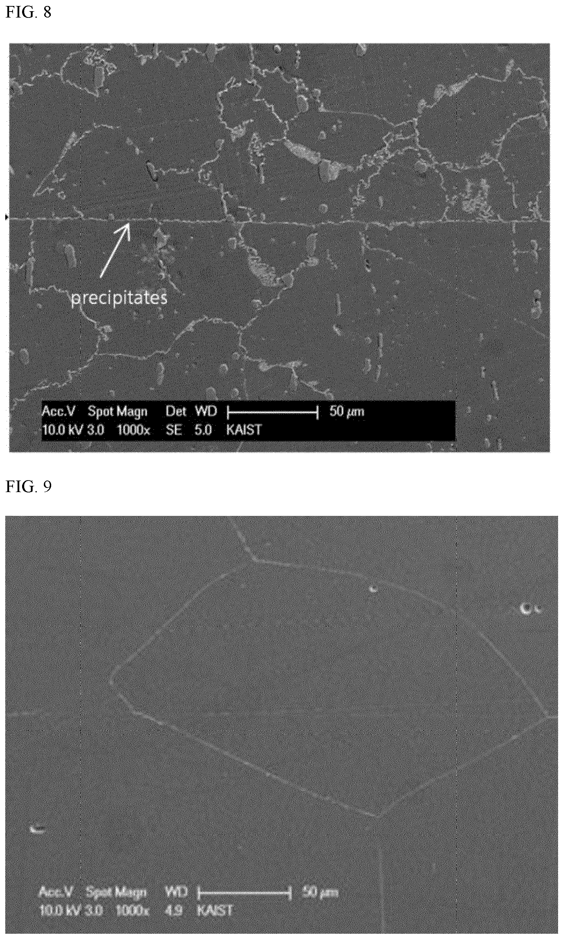

On the other hand, as illustrated in Fig. 8, when two plates are bonded by solid phase bonding, it may be seen that various formation phases are formed in the bonding portion before post heat treatment. Since precipitates are formed in line which may lead to poor bonding, they may have an adverse influence on mechanical physical properties.

Accordingly, post heat treatment may be performed at a temperature of 1200°C for 100 hours in order to remove defects due to the solid phase bonding from the bonding portion. However, since a high-temperature environment and a long processing time are required for the post heat treatment, production efficiency may be deteriorated.

As is apparent from the above description, a heat exchanger plate according to the present disclosure can allow another plate or other components such as a refrigerant pipe to be easily bonded by transition liquid phase bonding.

Since a plurality of plates are bonded by transition liquid phase bonding in a method of manufacturing a heat exchanger according to the present disclosure, a good bonding portion is formed without defects therein, thereby enabling the heat exchanger to have a high quality.

Since a method of bonding a heat exchanger plate according to the present disclosure does not require the conditions of a high degree of vacuum and a high pressure as in conventional solid phase bonding, it is possible to reduce costs for manufacturing equipment, easily employ a bonding condition, and more improve production efficiency.

Since the method of bonding a heat exchanger plate according to the present disclosure is performed for a short time, it is possible to suppress growth of crystal grains, and to thereby prevent deterioration of physical properties.

Since the method of bonding a heat exchanger plate according to the present disclosure does not require separate post heat treatment as in conventional solid phase bonding, it is possible to reduce production costs and times, and to thereby improve production efficiency. The embodiments discussed have been presented by way of example only and not limitation.

## Claims

1. A method of manufacturing a heat exchanger, comprising:
preparing two or more plates (1);
forming an alloy layer (100) on at least one surface of each of the plates (1) by electroless plating or thermal spray coating, wherein the alloy layer comprises at least one of melting point depression elements such as B, Si, and P;
after forming the alloy layer (100) by the electroless plating or thermal spray coating, forming a passage (10) operable to flow a liquid or gas in each of the plates (1); laminating the two or more plates (1), each having the alloy layer (100) formed thereon such that the alloy layer is interposed between the respective plates;
performing bonding heat treatment by heating and maintaining the laminated plates (1) under conditions of a degree of vacuum in the range of 1 × 10⁻⁴- to 1 × 10⁻³ torr and a temperature in the range of 900 to 1200°C for 0.1 to 6 hours, such that the alloy layer (100) is bonded to the adjacent plate by transition liquid phase bonding.

2. The method according to claim 1, wherein the forming an alloy layer is performed such that the alloy layer has a thickness of 30 to 100 µm.

## Patentansprüche

1. Verfahren zum Herstellen eines Wärmetauschers, das die folgenden Schritte umfasst:
Herstellen von zwei oder mehr Platten (1);
Ausbilden einer Legierungsschicht (100) auf wenigstens einer Oberfläche von jeder der Platten (1) durch stromlose Metallisierung oder durch thermische Spritzbeschichtung, wobei die Legierungsschicht wenigstens eines von Elementen zum Herabsetzen des Schmelzpunkts, wie etwa B, Si und P umfasst;
nach dem Ausbilden der Legierungsschicht (100) durch die stromlose Metallisierung oder thermische Spritzbeschichtung Ausbilden eines Durchgangs (10), der genutzt wird, damit eine Flüssigkeit oder ein Gas in jeder der Platten (1) strömen kann; Laminieren der zwei oder mehr Platten (1), wovon jede die darauf ausgebildete Legierungsschicht (100) hat, so dass die Legierungsschicht zwischen den jeweiligen Platten angeordnet ist;
Durchführen einer Bonding-Wärmebehandlung durch Heizen und Halten der laminierten Platten (1) unter Unterdruckbedingungen im Bereich von 1 × 10⁻⁴ bis 1 × 10⁻³ Torr und bei einer Temperatur im Bereich von 900 bis 1200 °C für 0,1 bis 6 Stunden, so dass sich die Legierungsschicht (100) durch temporäres Flüssigphasendiffusionsbonden mit der angrenzenden Platte verbindet.

2. Verfahren nach Anspruch 1, wobei das Ausbilden einer Legierungsschicht so ausgeführt wird, dass die Legierungsschicht eine Dicke im Bereich von 30 bis 100 µm hat.

## Revendications

1. Procédé de fabrication d'un échangeur de chaleur, comportant les étapes consistant à :
préparer deux plaques (1) ou plus ;
former une couche d'alliage (100) sur au moins une surface de chacune des plaques (1) par dépôt électrolytique ou revêtement par pulvérisation thermique, dans lequel la couche d'alliage comporte au moins l'un des éléments d'abaissement de point de fusion tels que B, Si et P ;
après la formation de la couche d'alliage (100) par dépôt électrolytique ou revêtement par pulvérisation thermique, former un passage (10) opérationnel pour faire couler un liquide ou un gaz dans chacune des plaques (1) ; laminer les deux ou plus de deux plaques (1), chacune ayant la couche d'alliage (100) formée sur celle-ci de telle sorte que la couche d'alliage est intercalée entre les plaques respectives ;
effectuer un traitement thermique d'assemblage par chauffage et maintenir les plaques (1) laminées dans des conditions d'un degré de vide dans la plage de 1 × 10⁻⁴ à 1 × 10⁻³ torr et une température dans la plage de 900 à 1200 °C pendant 0,1 à 6 heures, de telle sorte que la couche d'alliage (100) est assemblée à la plaque adjacente par un assemblage en phase de transition liquide.

2. Procédé selon la revendication 1, dans lequel la formation d'une couche d'alliage est réalisée de telle sorte que la couche d'alliage a une épaisseur de 30 à 100 µm.
